# EUROPÄISCHE PATENTSCHRIFT

(11) **EP 1 166 423 B1**
(45) Veröffentlichungstag und Bekanntmachung des Hinweises auf die Patenterteilung: **26.10.2011**
(21) Anmeldenummer: 00918705.5
(22) Anmeldetag: 17.03.2000
(51) Int. Cl.: H02K 1/27

(54) **MEHRPOLIGER, PERMANENTERREGTER ROTOR FÜR EINE ROTIERENDE ELEKTRISCHE MASCHINE UND VERFAHREN ZUR HERSTELLUNG EINES SOLCHEN ROTORS**
MULTIPOLE, PERMANENT-MAGNET ROTOR FOR A ROTATING ELECTRICAL MACHINE AND METHOD FOR PRODUCING SUCH A ROTOR
ROTOR MULTIPOLAIRE A AIMANTS PERMANENTS POUR MACHINE TOURNANTE ELECTRIQUE ET PROCEDE DE FABRICATION ASSOCIE

(30) Priorität: 19.03.1999 DE 19914021
(43) Veröffentlichungstag der Anmeldung: 02.01.2002
(73) Patentinhaber: SIEMENS AKTIENGESELLSCHAFT, 80333 München (DE)
(72) Erfinder: SCHÜRING, Ingo, D-10715 Berlin (DE)
(86) Internationale Anmeldenummer: PCT/DE2000/000853
(87) Internationale Veröffentlichungsnummer: WO 2000/057537

(56) Entgegenhaltungen:
- EP-A- 0 784 371
- FR-A- 2 578 116
- "RESEARCHERS PACK MORE POWER INTO ELECTRIC MOTOR" ELECTRONICS WORLD AND WIRELESS WORLD,GB,REED BUSINESS PUBLISHING, SUTTON, SURREY, Bd. 102, Nr. 1723, 1. Juni 1996 (1996-06-01), Seite 452 XP000597326 ISSN: 0959-8332

## Beschreibung

Die Erfindung liegt auf dem Gebiet der rotierenden elektrischen Maschinen und ist bei der konstruktiven Gestaltung von Rotorkernen anzuwenden, die mit Permanentmagneten in der sogenannten Flußkonzentrations-Bauweise bestückt sind.

Nach erfolgreicher Entwicklung spezieller Dauermagnete, sogenannter Hart-Ferrite, die den harten Beanspruchungen in elektrischen Maschinen gewachsen sind, sind derartige Magnete in größerem Umfang in rotierenden elektrischen Maschinen zur Erzeugung des rotierenden Magnetfeldes eingesetzt worden. Für Motoren und Generatoren mit Nennleistungen bis 30 kW bei 3000 U/min wurden verschiedene Möglichkeiten für die Anordnung der Permamentmagnete im Rotor oder im Stator entwickelt. Dabei hat sich oberhalb einer Nennleistung von einigen 100 W die sogenannte "Flußkonzentrations-Bauweise" als die technisch bessere Lösung erwiesen. Eine Ausführungsform dieser Bauweise besteht darin, die Permamentmagnete in den Pollücken des Rotors anzuordnen (Siemens-Zeitschrift 49, 1975, Heft 6, Seite 368ff/369, Bild 3). Eine bekannte konstruktive Lösung hierfür besteht darin, die im Querschnitt als flache Rechtecke und in Magnetisierungsrichtung flach ausgebildeten Permamentmagnete radial zur Rotorachse in nutartigen Zwischenräumen zwischen jeweils zwei am Rotorkörper fixierten Jochen anzuordnen (EP 0 582 721 B1). - Eine weitere bekannte konstruktive Lösung sieht vor, jedes Joch in zwei sich jeweils über eine halbe Polteilung erstreckende Halbjoche aufzuteilen und die Permanentmagnete und die Halbjoche dadurch am Rotorkern zu fixieren, daß bei zunächst unbefestigter Zuordnung der Permanentmagnete und der Halbjoche zum Kern die Permanentmagnete zwischen jeweils zwei Halbjochen mittels eines Riegels fixiert werden und daß jeweils die beiden Halbjoche eines Joches mittels eines geschlitzten hohlen Bolzens miteinander formschlüssig verbunden und in Umfangrichtung gegen die Permanentmagnete verspannt werden (US 4,700,096 A; FR 2 578 116 A).

Bezüglich des Handhabens von Permanentmagneten beim Aufbau von Rotoren elektrischer Maschinen ist es weiterhin bekannt, die Magnetkörper im unmagnetisierten Zustand zu montieren und nach ihrer Anordnung auf dem Rotor aufzumagnetisieren, beispielsweise mit Hilfe der Ständerwicklung der elektrischen Maschine(EP 0 195 741 B1).

Nachdem in neuerer Zeit hoch energiehaltige Magnete, z.B. auf der Basis Neodym-Eisen-Bor (NeFeB), entwickelt worden sind, kommt der Einsatz von permanenterregten Rotoren auch für elektrische Maschinen mit einer Nennleistung von mehr als 100 kW in Betracht, beispielsweise bei Schiffsantrieben mit einer Nennleistung von 5 bis 30 MW. Derartige Maschinen haben einen Rotordurchmesser von mehr als 25 cm bis zu etwa 300 cm. Wenn die Rotoren solcher Maschinen in Flußkonzentrationsbauweise aufgebaut werden, bereitet das Einbringen und Befestigen der Magnete Schwierigkeiten.

Ausgehend von einem permanenterregten Rotor mit den Merkmalen des Oberbegriffes des Patentanspruches 1 liegt der Erfindung die Aufgabe zugrunde, den Rotoraufbau so zu gestalten, daß die Permanentmagnete ohne großen Kraftaufwand montiert werden können.

Zur Lösung dieser Aufgabe ist gemäß der Erfindung vorgesehen, daß jeweils die beiden einander benachbarten Halbjoche zweier nebeneinander angeordneter Joche mittels Stirnplatten zu einem Polelement verbunden sind und jedes Polelement für sich auf dem Rotorkörper fixiert ist. Hierbei können die Polelemente derart ausgebildet sein, daß entweder jedes der beiden Halbjoche auf seiner einem nutartigen Zwischenraum zugewandten Fläche mit Permamentmagneten bestückt ist oder daß nur eines der beiden Halbjoche auf der dem anderen Halbjoch zugewandten Oberfläche mit Permanentmagneten bestückt ist. - Bei der Anordnung der Permamentmagnete auf den entsprechenden Oberflächen der Halbjoche und der Polelemente am Rotorkörper geht man zweckmäßig derart vor, daß die Magnete im nichtaufmagnetisierten Zustand auf die Halbjoche aufgebracht werden und daß nach dem Zusammenfügen zweier Halbjoche zu einem Polelement, aber noch vor dem Aufsetzen der Polelemente auf den Rotorkörper die Magnete aufmagnetisiert werden.

Bei einer derartigen Ausgestaltung der Pole und Zuordnung der Magnete zu den Polen des Rotors können sowohl die einzelnen Magnete bei ihrer Anordnung - in aller Regel durch Verkleben - auf den entsprechenden Oberflächen der Halbjoche als auch die aus Halbjochen und Magneten bestehenden Polelemente ohne übergroßen Kraftaufwand gehandhabt werden. Bei Rotoren größerer Länge empfiehlt es sich außerdem, die einzelnen Polelemente in Achsrichtung des Rotors in mehrere Teil-Polelemente aufzuteilen, um handliche und leicht magnetisierbare Einheiten zu erhalten.

Beim Zusammenfügen der einzelnen Teile eines Polelementes kann es zweckmäßig sein, zwischen den beiden Halbjochen verbleibende Zwischenräume mit einem Material auszufüllen, das unter Einwirkung von Tränkharzen quillt. Weiterhin kann man auch die zwischen den Halbjochen angeordneten Permamentmagnete in radialer Richtung durch Doppelkeile sichern, die sich an entsprechenden Vorsprüngen der Halbjoche abstützen.

Die Verbindung der jeweils beiden Halbjoche zu einem Polelement erfolgt zweckmäßig mittels zweier vorzugsweise amagnetischer Stirnplatten, die mit den beiden Halbjochen verschraubt und verstiftet werden und die die dauerhafte Fixierung der beiden Halbjoche zueinander übernehmen. Nach dem Zusammenbau der Polelemente können diese durch nachfolgende Tränkung mit einem Harz mit einem Oberflächenschutz versehen werden, der insbesondere die korrosionsempfindlichen Permamentmagnete dauerhaft vor schädlichen Einflüssen schützt.

Nach der Aufmagnetisierung der Polelemente werden diese auf den rohrförmig ausgebildeten Rotorkörper aufgesetzt und mit diesem von innen bzw. außen verschraubt. Der Rotorkörper ist dabei vorzugsweise amagnetisch ausgeführt.

Die gemäß der Erfindung vorgesehene Ausgestaltung von permanterregten Rotoren kann sowohl für Maschinen mit einem Innenläufer als auch für Maschinen mit einem Außenläufer angewendet werden. Bei Außenläufermaschinen kann es sich insbesondere um Generatoren von Windkraftanlagen oder um Antriebsmotore für Schachtförderanlagen handeln.

Drei Ausführungsbeispiele von gemäß der Erfindung ausgebildeten und hergestellten Rotoren sind in den Figuren 1 bis 5 ausschnittsweise dargestellt. Dabei zeigt
- Figur 1: ein erstes Ausführungsbeispiel für die Ausgestaltung der Pole und Joche,
- Figur 2: ein gemäß der Erfindung ausgebildetes Polelement in Frontansicht,

- Figur 3: die Aufteilung eines Polelementes in mehrere Teilpolelemente,
- Figur 4: ein zweites Ausführungsbeispiel für die Ausgestaltung von Polen und Jochen und
- Figur 5: die Ausgestaltung von an einem Außenläufer angeordneten Polen und Jochen.

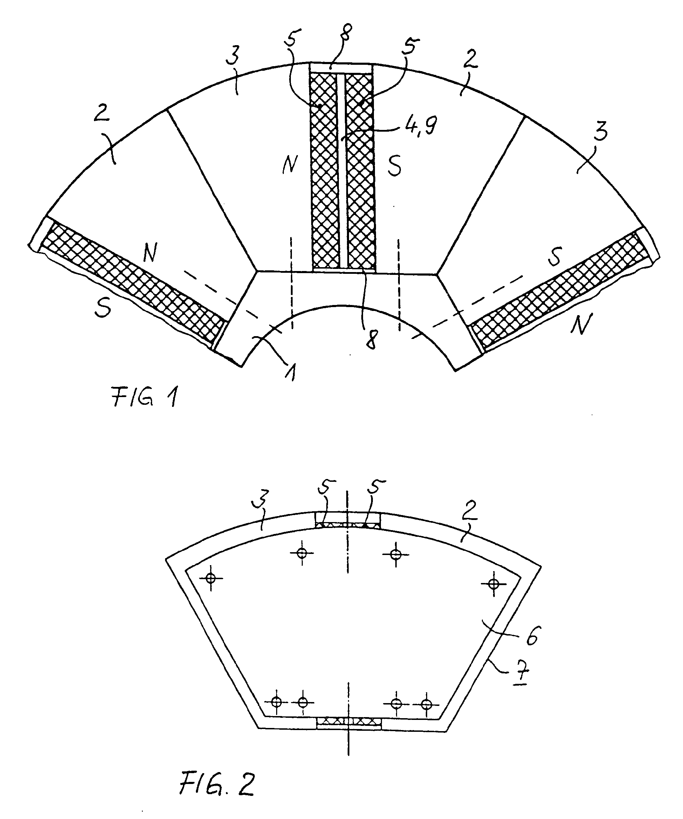

Figur 1 zeigt im Ausschnitt einen Querschnittsbereich eines Rotors einer elektrischen Maschine, der aus einem Rotorkörper 1, auf dem Rotorkörper 1 befestigten Rotorjochen 2/3 und an den Rotorjochen befestigten Permanentmagneten 5 besteht. Jedes Rotorjoch ist dabei in zwei Halbjoche 2,3 unterteilt, wobei zwischen jeweils zwei Jochen ein nutartiger Zwischenraum 4 vorgesehen ist. In den nutartigen Zwischenräumen 4 sind die in Umfangsrichtung magnetisierten Permanentmagnete 5 angeordnet, wobei sich jeweils ein Permamentmagnet 5 bzw. eine aus einer Vielzahl kleinerer Permamentmagnete bestehende Magnetschicht auf den dem nutartigen Zwischenraum 4 zugekehrten Oberfläche des jeweiligen Halbjoches angeordnet ist. Die Permanentmagnete 5 sind dabei üblicherweise mit dem Halbjoch 2 bzw. 3 verklebt. - Alternativ können auch beide Magnetschichten nur einem der beiden Halbjoche zugeordnet sein.

Der zwischen zwei Halbjochen 3 und 2 bzw. zwischen den einander benachbarten Permamentmagneten 5 verbleibende Zwischenraum kann gegebenenfalls mit einem unter Einwirkung von Tränkharz quellbaren Material 9 ausgefüllt sein. Weiterhin können zur radialen Fixierung der Permamentmagnete 5 können sowohl zwischen dem Rotorkörper 1 und den Permamentmagneten als auch zwischen den Permamentmagneten und der Peripherie des Rotors Doppelkeile 8 angeordnet sein.

Gemäß Figur 2 sind jeweils zwei zu unterschiedlichen Jochen gehörende Halbjoche 3,2 zusammen mit den an den entsprechenden Seitenflächen angeordneten Permamentmagneten 5 mit Hilfe von Stirnplatten 6 zu einem Polelement 7 zusammengefaßt. Mehrere derartige Polelemente werden unabhängig voneinander am Umfang des Rotorkörpers 1 angeordnet und beispielsweise durch eine Schraubverbindung mit dem Rotorkörper verbunden.

Bei der Herstellung der Polelemente 7 geht man zweckmäßig derart vor, daß zunächst auf der entsprechenden Seitenfläche eines Halbjoches 2 bzw. 3 der noch nicht aufmagnetisierte Permamentmagnet angeordnet, d.h. aufgeklebt wird. Anschließend werden zwei Halbjoche 2,3 einander zugeordnet und mit Hilfe von zwei Stirnplatten 6 zueinander fixiert. Danach wird das so entstandene Polelement 7 in eine Aufmagnetisierungsvorrichtung gegeben und es werden die Permamentmagnete 5 aufmagnetisiert. Das aufmagnetisierte Polelement 7 kann dann auf dem Rotorkörper 1 angeordnet werden.

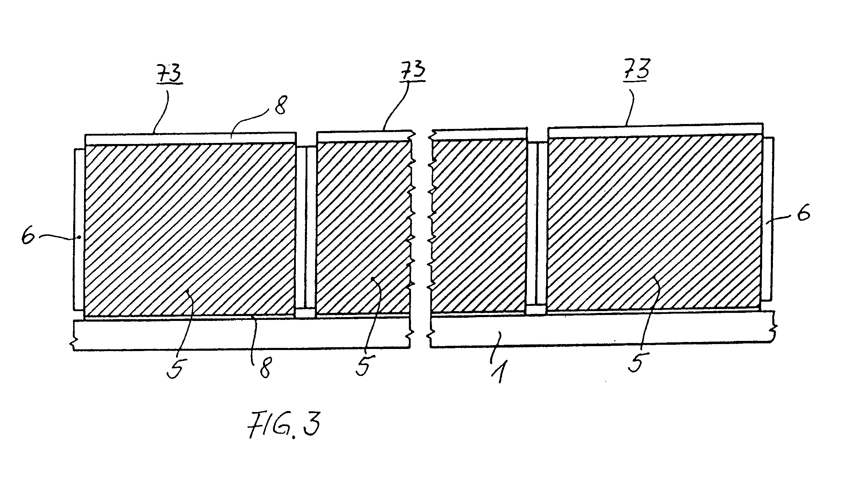

Bei elektrischen Maschinen mit größerer Länge des Rotors empfiehlt es sich, das jeweilige Polelement 7 in Achsrichtung des Rotors in Teilpolelemente 73 aufzuteilen, wie es in Figur 3 dargestellt ist. Dabei sind dann mehrere gemäß Figur 2 ausgebildete Teilpolelemente axial hintereinander auf dem Rotorkörper angeordnet.

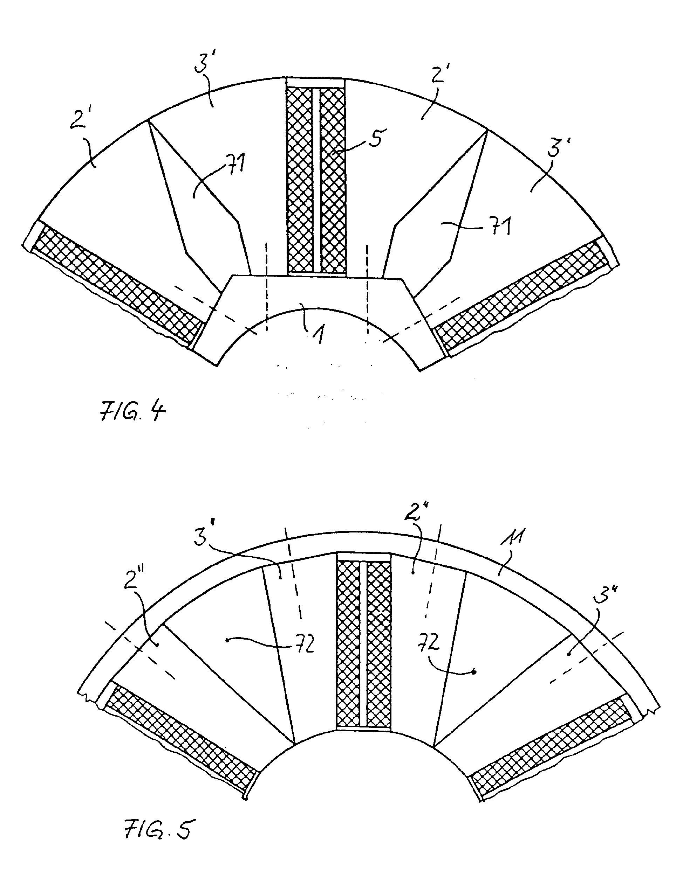

Figur 4 zeigt eine Variante zu Figur 1. Hierbei sind die Halbjoche 2',3' so ausgebildet, daß zwischen ihnen ein als Flußsperre wirkender Hohlraum 71 entsteht. Über diesen Hohlraum kann der von der Ständerwicklung erzeugte Anteil des magnetischen Flusses in den einzelnen Halbjochen beeinflußt werden.

Gemäß Figur 5 ist der dargestellt Rotor als Außenläufer mit einem außen angeordneten Tragkörper 11 ausgebildet. Die Anordnung von Halbjochen 2" und 3" sowie die Zuordnung der Permamentmagnete 5 entspricht im Prinzip den Ausführungsbeispielen gemäß Figur 1 und 4. Hier ist abweichend von Figur 4 ein V-förmig gestalteter flußfreier Raum 72 zwischen jeweils zwei Halbjochen vorgesehen.

## Patentansprüche

1. Mehrpoliger, permanenterregter Rotor für eine rotierende elektrische Maschine, bei dem zur Erzeugung von ausgeprägten Magnetpolen quaderförmige, in Magnetisierungsrichtung flach ausgebildete Permanentmagnete (5) radial zur Rotorachse in nutartigen Zwischenräumen zwischen jeweils zwei am Rotorkörper (1) fixierten Jochen (2, 3) angeordnet sind,
wobei jedes Joch in Umfangsrichtung in zwei sich jeweils über eine halbe Polteilung erstreckende Halbjoche (2,3) aufgeteilt ist,
**dadurch gekennzeichnet,**
**daß** jeweils die beiden einander benachbarten Halbjoche (3,2) zweier nebeneinander angeordneter Joche mittels Stirnplatten (6) zu einem Polelement (7) verbunden sind und jedes Polelement (7) für sich an dem Rotorkörper (1) fixiert ist.

2. Permanenterregter Rotor nach Patentanspruch 1,
**dadurch gekennzeichnet, daß** jedes der beiden Halbjoche auf seiner einem nutartigen Zwischenraum (4) zugewandten Fläche mit Permanentmagneten (5) bestückt ist.

3. Permanenterregter Rotor nach Patenanspruch 2,
**dadurch gekennzeichnet,**
**daß** die zwischen den beiden Halbjochen (2, 3) eines Polelementes (7) verbleibenden Zwischenräume (4) mit unter Einwirkung von Tränkharz quellbarem Material (9) ausgefüllt sind.

4. Permanenterregter Rotor nach einem der Ansprüche 1 bis 3,
**dadurch gekennzeichnet,**
**daß** die Permanentmagnete (5) radial durch Doppelkeile (8) gesichert sind.

5. Permanenterregeter Rotor nach einem der Ansprüche 1 bis 4,
**dadurch gekennzeichnet,**
**daß** die einzelnen Polelemente (7) in Achsrichtung des Rotors in mehrere Teilpolelemente (73) aufgeteilt sind.

6. Verfahren zu Herstellung eines permanenterregten Rotors nach Patentanspuch 1, bei dem zunächst nichtaufmagnetisierte Magnete vor ihrer Anordnung am Rotorkörper aufmagnetisiert werden,
**dadurch gekennzeichnet,**
**daß** die Magnete (5) nach dem Zusammenfügen zweier Halbjoche zu einem Polelement (7) aufmagnetisiert werden.

## Claims

1. Multipole, permanent-magnet rotor for a rotating electrical machine, in which permanent magnets (5) which are cuboid in order to produce salient magnet poles and are designed to be flat in the magnetization direction are arranged radially with respect to the rotor axis in slot-like spaces between each two yokes (2, 3) that are fixed on the rotor body (1),
each yoke being subdivided in the circumferential direction into two half-yokes (2, 3) which each extend over half of one pole pitch,
**characterized in that** the two mutually adjacent half-yokes (3, 2) of two yokes arranged alongside one another are in each case connected by means of end points (6) to form a pole element (7), and each pole element (7) is fixed on its own on the rotor body (1).

2. Permanent-magnet rotor according to Patent Claim 1,
**characterized in that**
each of the two half-yokes is fitted with permanent magnets (5) on its surface facing a slot-like intermediate space (4).

3. Permanent-magnet rotor according to Patent Claim 2,
**characterized**
**in that** the intermediate spaces (4) which remain between the two half-yokes (2, 3) of a pole element (7) are filled with material (9) which can expand under the influence of impregnation resin.

4. Permanent-magnet rotor according to one of Claims 1 to 3,
**characterized**
**in that** the permanent magnets (5) are secured radially by means of double wedges (8).

5. Permanent-magnet rotor according to one of Claims 1 to 4,
**characterized**
**in that** the individual pole elements (7) are subdivided into a number of partial pole elements (73) in the axial direction of the rotor.

6. Method for producing a permanent-magnet rotor according to Patent Claim 1, in which non-magnetized magnets are magnetized before being arranged on the rotor body,
**characterized**
**in that** the magnets (5) are magnetized once the two half-yokes have been joined together to form a pole element (7).

## Revendications

1. Rotor multipolaire à aimant permanent pour une machine tournante électrique, dans lequel, pour la production de pôles magnétiques saillants, des aimants ( 5 ) permanents parallélépipédiques et plats dans la direction d'aimantation sont disposés radialement à l'axe du rotor dans des espaces intermédiaires de type à encoche entre respectivement deux culasses ( 2, 3 ) immobilisés sur le corps ( 1 ) du rotor,
dans lequel chaque culasse est subdivisée dans la direction périphérique en deux demi-culasses ( 2, 3 ) s'étendant respectivement sur un demi-pas polaire,
**caractérisé**
**en ce que** respectivement les deux demi-culasses ( 3, 2 ) voisines l'une de l'autre de deux culasses disposées l'une à côté de l'autre sont reliées à un élément ( 7 ) polaire au moyen de plaques ( 6 ) frontales et chaque élément ( 7 ) polaire est immobilisé en soi sur le corps ( 1 ) du rotor.

2. Rotor à aimant permanent suivant la revendication 1,
**caractérisé en ce que**
chacune des deux demi-culasses est équipée d'aimants ( 5 ) permanents sur sa surface tournée vers un espace ( 4 ) intermédiaire de type à encoche.

3. Rotor à aimant permanent suivant la revendication 2,
**caractérisé**
**en ce que** les espaces ( 4 ) intermédiaires subsistant entre les deux demi-culasses ( 2, 3 ) d'un élément ( 7 ) polaire sont remplis de matière ( 9 ) pouvant gonfler sous l'effet d'une résine d'imprégnation.

4. Rotor à aimant suivant l'une des revendications 1 à 3,
**caractérisé**
**en ce que** les aimants ( 5 ) permanents sont assujettis radialement par des coins ( 8 ) doubles.

5. Rotor à aimant suivant l'une des revendications 1 à 4,
**caractérisé**
**en ce que** les divers éléments ( 7 ) polaires sont répartis en plusieurs sous-éléments ( 73 ) polaires dans la direction axiale du rotor.

6. Procédé de fabrication d'un rotor à aimant permanent suivant la revendication 1, dans lequel on aimante d'abord des aimants non aimantés avant de les mettre sur le corps du rotor,
**caractérisé**
**en ce qu'**on aimante les aimants ( 5 ) après la jonction de deux demi-culasses en un élément ( 7 ) polaire.
